Europäisches Patentamt

(19) European Patent Office

Office européen des brevets

(11) Publication number: **0 102 337**
**A2**

(12)

# EUROPEAN PATENT APPLICATION

(21) Application number: **83850223.5**

(51) Int. Cl.³: **A 22 B 5/20**

(22) Date of filing: **25.08.83**

(30) Priority: **25.08.82 SE 8204851**

(43) Date of publication of application:
**07.03.84 Bulletin 84/10**

(84) Designated Contracting States:
**AT BE CH DE FR GB IT LI NL**

(71) Applicant: **Sveriges Slakteriförbund förening u.p.a.**
**S-121 86 Johanneshov(SE)**

(72) Inventor: **Svensson, John-Ake**
**Prennegatan 2 F**
**S-223 53 Lund(SE)**

(74) Representative: **Linde, Leif**
**Vernamo Patentbyrå AB P.O. Box 1**
**S-270 11 Abbekas(SE)**

(54) A method and apparatus for the treatment of a carcass.

(57) The invention relates to a method of treating carcasses. According to the invention, the carcass is identified by determination of the position of the first and last rib, counted from the head of the carcass.

./...

Croydon Printing Company Ltd.

Fig.1.

1

The present invention relates to a method and apparatus for the treatment of a carcass, preferably for its identification with a view to facilitating the subsequent cutting up of the carcass.

Carcasses are cut up according to predetermined cutting up patterns. After the carcasses have been split along the spine, which usually takes place automatically and in a machine, the final cutting up of the carcasses into various cuts of meat, such as ribs, leg, foreknuckle, hindknuckle etc on cutting up pigs, is done manually with the carcasses - which have been split along the spine - suspended by the hindleg. To make it easier, this final cutting up operation is generally preceded by a preliminary sawing operation in which the suspended split carcasses are sawn through to make cuts which, as they extend through the skeleton of the carcasses, cannot normally be made manually by means of a knife.

To achieve an optimum cutting up, the cuts realized by the preliminary sawing are referred to certain points of the carcasses, the ribs for instance of a pig being divided from the remainder of the carcass by preliminary sawing in which the cuts are placed in a certain way relative to the vertebral column. Even though it would be extremely advantageous for reasons of efficiency and cost to be able to perform not only the cutting up of the carcasses but also at least some part of the subsequent cutting up operation, e.g. the preliminary sawing, automatically and in a machine, it is realized that the requirements for the adaptation of the cutting up of an individual carcass to the individual characteristics thereof presuppose that these characteristics are sensed so that they may be utilized for the control of an automatic cutting up operation carried out in a machine.

At the present time there is no simple and reliable method of treating a carcass for the identification of its individual characteristics, that will provide the necessary basis for performing an automatic and mechanical cutting up operation in a correct manner.

The object of the present invention therefore is to provide a method and an apparatus for the treatment of a carcass, whereby it will be possible to obtain a basis for a continued treatment of the carcass, that is, cutting it up.

2

To this end, the method according to the invention comprises identifying the carcass by determination of the distance between the first and last rib, counted from the head of the carcass.

The identification of the carcass is suitably utilized in order to refer the carcass to a predetermined order of size, whereupon the carcass can be cut up while placing the cuts at points of the carcass that have been predetermined with regard to the order of size to which the carcass has been referred.

The use of the ribs of the carcass for providing the basis for an individually adapted treatment of the carcass which is then carried out automatically and mechanically has proved to be surprisingly advantageous in view of both reliability and the simplicity of determining the distance between the first and last rib of the carcass. According to the invention, it is furthermore preferred to identify the carcass by determining the distance of the spine from an abutment surface against which the back of the carcass is pressed.

Employing the method according to the invention, it is suitable to deter-. mine the distance between the first and last rib by sensing the position of the points of the transitions between the first rib and the adjoining meat and between the last rib and the adjoining meat, and by determining the distance between the sensing points. Sensing the points of the transitions between the first rib and the adjoining meat and between the last rib and the adjoining meat can be performed in different ways, for instance mechanically, by resistance measurement, with the aid of ultrasound and by transmission measurement.

The method according to the invention is carried out by means of an apparatus which is characterized by the fact that it comprises a device for determining the distance between the first and last rib of the carcass, counted from the head of the carcass.

For greater clarity, the invention will be described more in detail below, with reference to the accompanying drawings, in which:

Fig 1 diagrammatically shows the split surface of a pig carcass suspended by the hindleg;

Fig 2 diagrammatically shows a section on the line II-II in Fig 1;

Fig 3 diagrammatically shows an apparatus for treating a carcass in conformity with the invention.

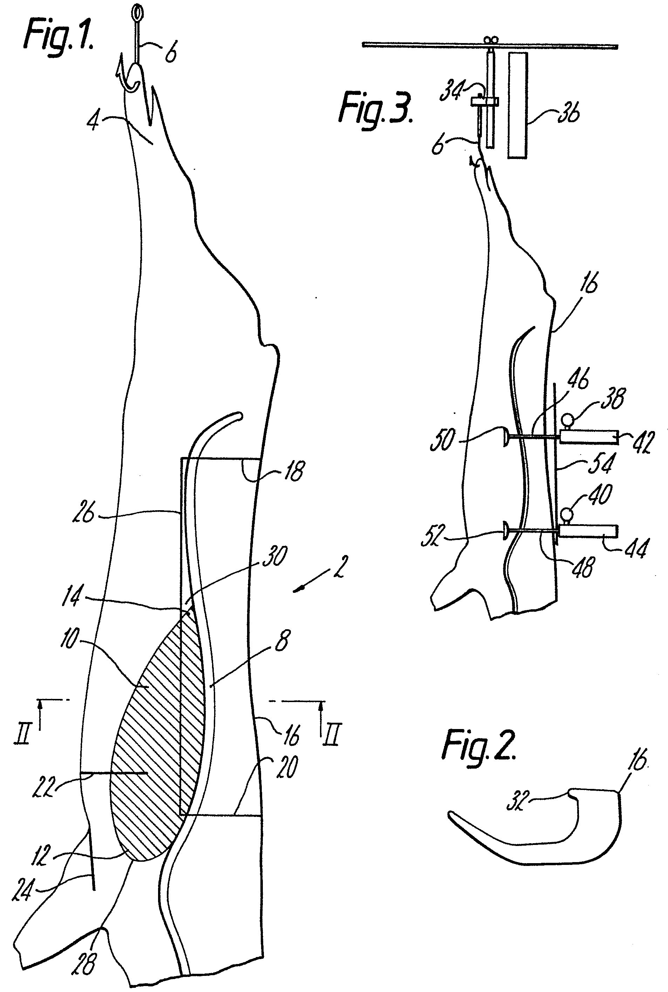

In fig 1 there is shown a longitudinally split pig carcass 2 which is suspended by its hindleg 4 on a hook 6. The figure diagrammatically illustrates the vertebral column spine 8 and rib portion 10 of the pig carcass. In the figure, the first rib counted from the head of the carcass is designated by reference numeral 12 and the last rib counted from the head of the carcass by reference numeral 14. The back line of the pig carcass is designated by reference numeral 16 in fig 1.

The method and the apparatus for treating a carcass in conformity with the invention, for instance the pig carcass illustrated in fig 1, can be exploited to provide the basis for an automatic and mechanical preliminary sawing of the carcass. The preliminary sawing of a pig carcass generally takes place in the manner shown in fig 1, where the preliminary sawing cuts are designated by reference numerals 18-26. More particularly, reference numeral 18 designates a cut which is sawn at right angles to the back line 16 in the joint between the first and second vertebra of the vertebral column 8. Reference numeral 20 designates a cut which is sawn at right angles to the back line 16 in the joint between the tenth and eleventh vertebra of the vertebral column 8. Reference numeral 22 designates a cut which extends into the rib portion directly above the fifth rib or as a continuation of the cut 20. Reference numeral 24 designates a cut which is placed at the foreknuckles immediately above the elbow joint. Reference numeral 26 designates a cut by which the ribs are separated from the rib portion so that nine centimetres of the rib portion and the vertebral column 8 are assigned to the ribs.

In accordance with the method of the invention, the position of the points designated 28, 30 and 32 is determined. Reference numeral 28 designates the transition between the first rib 12 counted from the head of the carcass and the adjoining meat, while reference numeral 30 designates the transition between the last rib 14 counted from the head of the carcass and the adjoining meat. Reference numeral 32 designates that edge of the vertebral column 8 which is the inner one relative to the back line 16.

According to the invention, the distance between the points 28 and 30 and the distance between the back line 16 and the point 32 are determined.

The determination of the distance between the points 28 and 30 forms the basis for referring the pig carcass 2 to one of a predetermined number of orders of size. The number of orders of size is chosen with due consideration of the requirement for exactitude at the subsequent cutting up. The determination of the positions of the points 28 and 30 relative to a point of reference which suitably is the point of suspension from the hook 6 and/or the distance between the points 28 and 30 is utilized to determine the positions of the cuts 18, 20 and 22 and possibly also of the cut 24. The position of the point 32 relative to the back line 16 is used to determine the cut 26.

Fig 2 diagrammatically illustrates an apparatus for determining the points 28, 30 and 32. The apparatus comprises a suspension device 34 for the hook 6, by means of which device the hook is vertically movable for raising and lowering the carcass carried by the hook. The apparatus also comprises a diagrammatically illustrated device 36 for determining the size of the shifting movement of the suspension device. The apparatus further comprises two piston and cylinder units 38 and 40 which are vertically spaced apart and operate in a direction at right angles to the plane of the figure. The pistons of the piston and cylinder units 38 and 40 each carry one piston and cylinder unit 42 and 44, respectively, operating in a direction parallel with the plane of the figure. Each of the piston and cylinder units 42 and 44 carries by means of its respective piston rods 46 and 48 a sensing means 50 and 52, respectively.

The apparatus shown in fig 3 operates in the following manner:

The piston and cylinder unit 42 moves the sensing means 50 to the left in the figure to a position in which the sensing means 50 is to the left of the vertebral column 8. Then the cylinder unit 38 moves the cylinder unit 42 and the sensing means 50 carried thereby towards the pig carcass to a position in which part of the sensing means 50 is in the same plane as the vertebral column 8.

Now the suspension device 34 is activated to move the hook 6 and thus the pig carcass 2 carried thereby downwardly while the sensing element of the sensing means 50 engages the rib portion 10. When the engagement of the sensing element with the rib portion ceases, that is, when the sensing element at the downward movement of the pig carcass has passed the last rib 14, the one most remote from the head of the carcass, there is delivered a signal from the sensing means 50, whereby the lowering of the hook 6 and the carcass 2 by the suspension device 34 ceases and the device 36 for determining the shifting movement of the suspension device 34 is zeroised.

The piston and cylinder unit 44 moves the sensing means 52 to the left to a position in which said sensing means is to the left of the vertebral column 8. The piston and cylinder unit 44 and the sensing means 52 are then moved towards the pig carcass 2 by the piston and cylinder unit 40 to a position in which part of the sensing means 52 is in the same plane as the vertebral column 8. The piston and cylinder unit 44 then moves the sensing means 52 to the right in fig 3 to a position in which part of the sensing means 52 engages the vertebral column 8 and urges the back line 16 of the pig carcass into engagement with the abutment surface 54. As a result, a sensing element associated with the sensing means 52 will be in engagement with the rib portion 10 at a predetermined distance from the vertebral column 8.

The suspension device 34 is activated to move the hook 6 and the pig carcass 2 in an upward direction. This movement continues until the sensing element of the sensing means 52 has passed the first rib 12, the one closest to the head of the carcass, when the sensing means 52 produces a signal which causes the movement of the suspension device 34 to cease.

The above described apparatus permits determining the distance between the point of suspension of the carcass and the point 28, the distance between the suspension point of the carcass and the point 30, the distance between the points 28 and 30, and the distance between the point 32 and the back line 16 of the carcass on the two different height levels of the sensing means 50 and 52. As will be realized, the first-mentioned distances are determined by the device 36. For the determination of the movement of the carcass in vertical direction the device 36 may include a magnetic ruler. It will be realized that any other conventional equipment whatever can be used to determine the vertical movement of the carcass.

6

The position of the points 32 is obatained by determining the position of the pistons of the piston and cylinder units 42 and 44, respectively, at the stage when parts of the sensing means 50 and 52, respectively, engage the vertebral column 8 in the above described manner.

The sensing elements of the sensing means 50 and 52 can have the form of wheels rolling on the ribs and sinking down into the adjoining meat when they have gone past the ribs. In this connection a microswitch can be employed to indicate the movement arising when the wheels sink down into the meat. Instead of this mechanical determination of the point of transition between bone and meat, the transition between bone and meat can be determined by resistance measurement, by the use of ultrasound or by transmission measurement with e.g. cesium rays. When applying resistance measurement, ultrasound or transmission measurement, the analysis of the signals is preferably carried out with a microcomputer. Naturally, the transition between bone and meat in a carcass can also be determined in any other way without departing from the principles of the invention.

As already mentioned, the position of the points determined can be used to form the basis for an automatic preliminary sawing of the carcass on which the points in question have been determined. It will, however, be realized that the determination of said points can also be used to form the basis for any other continued processing or treatment of the carcass.

The invention may be modified within the scope of the appendant claims.

CLAIMS

1. A method of treating a carcass, c h a r a c t e r i z e d by identifying the carcass by determination of the position of the first and last rib, counted from the head of the carcass.

2. A method as claimed in claim 1, c h a r a c t e r i z e d by identifying the carcass by determination of the distance between the first and last rib.

3. A method as claimed in claim 1 or 2, c h a r a c t e r i z e d by in addition identifying the carcass by determination of the distance of the spine from an abutment surface against which the back of the carcass is pressed.

4. A method as claimed in claim 1 or 2, c h a r a c t e r i z e d by sensing the position of the points of the transitions between the first rib and the adjoining meat and between the last rib and the adjoining meat, and determining the distance between the sensing points.

5. A method as claimed in claim 4, c h a r a c t e r i z e d by sensing the position of the points of said transitions by means of a sensing means which mechanically senses the transitions between bone and meat.

6. A method as claimed in claim 4, c h a r a c t e r i z e d by determining the position of the points of said transitions by resistance measurement.

7. A method as claimed in claim 4, c h a r a c t e r i z e d by determining the position of the points of said transitions by ultrasound.

8. A method as claimed in claim 4, c h a r a c t e r i z e d by determining the position of the points of said transitions by transmission measurement, with the aid of e.g. cesium rays.

9. A method as claimed in any of the preceding claims, c h a r a c t e r i z e d by utilizing the identification of the carcass to refer said carcass to a predetermined order of size.

10. A method as claimed in claim 9, c h a r a c t e r i z e d by cutting up

the carcass while the cuts are placed at points of the carcass that have been predetermined with regard to the order of size to which the carcass has been referred.

11. An apparatus for treating a carcass by the method claimed in claim 1, c h a r a c t e r i z e d in that it comprises a device for determining the position of the first and last rib of the carcass, counted from the head of the carcass.

12. An apparatus as claimed in claim 11, c h a r a c t e r i z e d in that it comprises an abutment surface, a device for pressing the back of the carcass against the abutment surface, and a device for determining the distance between the spine of the carcass and the abutment surface.

13. An apparatus as claimed in claim 11 or 12, c h a r a c t e r i z e d in that the device for determining the position of the first and last rib of the carcass includes a sensing means for sensing the position of the points of the transitions between the first rib and the adjoining meat and between the last rib and the adjoining meat.

14. An apparatus as claimed in claim 13, c h a r a c t e r i z e d in that the sensing means is vertically stationary and that the apparatus includes a device for raising and lowering the carcass with said carcass hanging in substantially vertical position.

Fig.1.

Fig.3.

Fig.2.

0102337

1/1